# EUROPÄISCHE PATENTSCHRIFT

(11) **EP 1 663 557 B1**
(45) Veröffentlichungstag und Bekanntmachung des Hinweises auf die Patenterteilung: **20.07.2011**
(21) Anmeldenummer: 04764778.9
(22) Anmeldetag: 03.09.2004
(51) Int. Cl.: B23B 51/00, B23C 5/00

(54) **WERKZEUG UND VERFAHREN ZUR SPANENDEN FEINBEARBEITUNG VON WERKSTÜCKEN**
TOOL AND METHOD FOR FINE MACHINING WORKPIECES
OUTIL ET PROCEDE POUR USINER DES PIECES AVEC PRECISION PAR ENLEVEMENT DE COPEAUX

(30) Priorität: 11.09.2003 DE 10341976
(43) Veröffentlichungstag der Anmeldung: 07.06.2006
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2004/009822
(87) Internationale Veröffentlichungsnummer: WO 2005/025793

(56) Entgegenhaltungen:
- CH-A- 513 691
- DE-A- 3 602 427
- GB-A- 1 368 270
- US-A- 2 842 015

## Beschreibung

Die Erfindung betrifft ein Werkzeug zur spanenden Feinbearbeitung von Werkstücken gemäß Oberbegriff des Anspruchs 1 sowie ein Verfahren zur spanenden Feinbearbeitung von Werkstücken gemäß Oberbegriff des Anspruchs 3.

Werkzeuge und Verfahren der hier angesprochenen Art sind bekannt (GB 1 368 270 A, CH 513 691 A). Es gibt auch Werkzeuge, die sich durch eine so genannte Stufenschneide auszeichnen, die eine geometrisch definierte Schneidkante umfasst. Zur Feinbearbeitung von Werkstücken wird das Werkzeug und/oder das Werkstück in Rotation gesetzt und in Richtung der Drehachse eine axiale Verlagerung durchgeführt, so dass die Schneide Späne von einer zu bearbeitenden Oberfläche des Werkstücks abträgt. In der Regel wird das Werkstück eingespannt, das Werkzeug in Rotation versetzt und einer Vorschubbewegung unterworfen. Dadurch trägt die Schneide von einer Oberfläche des Werkstücks Späne ab.

Die - in Vorschubrichtung gesehen - vordere Stufe der Stufenschneide ist für die Schrupp- oder Vorbearbeitung, die hintere Stufe für die Schlicht- oder Fertigbearbeitung der Werkstückoberfläche vorgesehen. Stufenschneiden sind zum Einen sehr aufwendig und schwierig herzustellen, darüber hinaus ist auch das Nachschleifen derartiger Schneiden schwierig. Zum Anderen ist die Ausführung der Schneiden für die Vor- und Fertigbearbeitung praktisch gleich, zumindest bestehen sie aus dem gleichen Werkstoff. Dies ist angesichts der unterschiedlichen Anforderungen an die Vor- und Fertigbearbeitung und damit an die Schneiden negativ: Die Schneide für die Vorbearbeitung muss insbesondere warmfest sein, die für die Fertigbearbeitung muss eine hohe Kantenfestigkeit aufweisen. Daher sind aus dem Stand der Technik Werkzeuge bekannt, bei denen die Vorbearbeitungsstufe und die Fertigbearbeitungsstufe nicht einstückig miteinander sind, sondern bei denen eine Schnittstelle vorgesehen ist, sodass die beiden Stufen voneinander trennbar sind. Solche Werkzeuge gehen beispielsweise aus der GB 1 368 270 A sowie aus der CH 513 691 A hervor.

An die Herstellungsgenauigkeit von Bohrungen in Werkstücken werden immer höhere Anforderungen gestellt. Besonders wichtig ist die Maßgenauigkeit der Bohrung, also deren Durchmesser, Rundheit und Zylindrizität, außerdem ist die Oberflächengüte von entscheidender Bedeutung.

Wesentlich ist, dass Genauigkeit und Oberflächengüte bei der Bearbeitung einer großen Zahl von Werkstücken einzuhalten ist, auch bei schwierig zerspanbaren Materialien wie zum Beispiel bestimmten Guss- und Stahlsorten. Es hat sich herausgestellt, dass die Verbesserung der Genauigkeit und eine Verlängerung der Standlänge mit der Schnitttiefe während der Fertigbearbeitung in Zusammenhang stehen: Je geringer die Schnitttiefe, desto besser sind die erreichte Oberflächengüte, Maßgenauigkeit und die Standzeit.

Bezüglich der hier angesprochenen Anforderungen ergeben sich die besten Ergebnisse bei Schnitttiefen, die in einem Bereich von wenigen 1/100 mm liegen (vgl. DE 36 02 427 A1). Um ein gleichmäßiges Aufmaß von so geringer Größe zu erreichen, muss die Konzentrizität zwischen Vor- und Fertigbearbeitung sehr exakt sein. Dies bedeutet einen sehr großen Aufwand im Bereich der Vorbearbeitung.

Die Verwendung der oben angesprochenen Stufenschneiden hat sich angesichts der aufwändigen und schwierigen Herstellung und insbesondere angesichts der Probleme beim Nachschleifen nicht bewährt. Diese Probleme treten bei Werkzeugen, die eine Schnittstelle zwischen der Vor- und der Fertigbearbeitungsstufe aufweisen typischerweise nicht auf. Hier ist es allerdings problematisch, eine ausreichende Koaxialität der Bearbeitungsstufen auch für eine höchsten Ansprüchen genügende Feinbearbeitung sicherzustellen.

Es sind Verfahren zur Feinbearbeitung von Werkstücken bekannt, bei denen zwei unterschiedliche Werkzeuge eingesetzt werden, von denen eines der Vorbearbeitung und eines der Fertigbearbeitung des Werkstücks dient. Bei der Bearbeitung eines Werkstücks muss also nach der Vorbearbeitung ein Werkzeugwechsel erfolgen, um die Fertigbearbeitung durchführen zu können. Denkbar ist es auch, in einer Transferlinie das Werkstück zunächst einem Vorbearbeitungs- und dann einem Fertigbearbeitungswerkzeug zuzuführen. Problematisch ist, dass die Drehachsen der Werkzeuge nicht genau koaxial zueinander verlaufen, so dass keine ausreichende Herstellungsgenauigkeit und keine optimale Oberflächengüte erzielbar sind. Verfahren zur Vor- und Fertigbearbeitung eines Werkstücks können auch mit Hilfe von Werkzeugen durchgeführt werden, die eine Schnittstelle aufweisen, welche eine Vor- und eine Fertigbearbeitungsstufe verbindet. Hierbei ist es aber schwierig, eine ausreichend genaue Koaxialität zwischen den beiden Bearbeitungsstufen sicherzustellen, sodass insbesondere höchste Ansprüche an die Feinbearbeitung erfüllt werden können.

Ein weiteres Problem bei bekannten Werkzeugen und Verfahren ist, dass keine ausreichende Kühlung beziehungsweise Schmierung sowohl der Vor- als auch der Fertigbearbeitungsstufe vorgesehen ist.

Nach allem zeigt sich also, dass das Werkzeug und das Verfahren keine ausreichende Herstellungsgenauigkeit gewährleisten, und dass die Standzeit des Werkzeugs nicht ausreichend ist, insbesondere auch deswegen, weil keine ausreichende Kühlung beziehungsweise Schmierung sowohl der Vor- als auch der Fertigbearbeitungsstufe vorgesehen ist.

Aufgabe der Erfindung ist es daher, ein Werkzeug und ein Verfahren : zur Feinbearbeitung von Werkstücken zu schaffen, die die genannten Nachteile vermeiden.

Zur Lösung dieser Aufgabe wird ein Werkzeug vorgeschlagen, das die in Anspruch 1 genannten Merkmale aufweist. Es weist eine der Vorbearbeitung dienende und eine der Fertigbearbeitung dienende Schneide auf, die durch eine Schnittstelle voneinander getrennt sind. Durch die Trennung der beiden Schneiden ist es möglich, jeweils speziell auf die Bearbeitung, also auf die Vor- und Fertigbearbeitung, abgestimmte Schneiden zu verwenden, was zu einer deutlichen Verbesserung der Herstellungsgenauigkeit führt. Die Schnittstelle weist eine Vorbearbeitungsstufe mit einer ersten Planfläche und eine Fertigbearbeitungsstufe mit einer zweiten Planfläche auf. Sie umfasst weiterhin eine die Koaxialität der Vorbearbeitungsstufe und der Fertigbearbeitungsstufe zueinander gewährleistende Einrichtung, die einer koaxialen Ausrichtung der Stufen relativ zueinander dient. Das Werkzeug zeichnet sich dadurch aus, dass die genannte Einrichtung eine konische Ausnehmung und einen in diesen eingreifenden konischen Schaft aufweist. Sie ist dabei so ausgelegt, dass sich bei einer Verbindung der beiden Bearbeitungsstufen über die Schnittstelle ein Rundlauffehler von maximal 3 µm einstellt. Die Stufen können also sehr präzise miteinander verbunden werden, sodass sich sehr geringe Schnitttiefen von wenigen 1/100 mm realisieren lassen. Das Werkzeug zeichnet sich noch dadurch aus, dass Kühl-/Schmiermittelkanäle zur Einleitung von Kühl-/Schmiermittel in die Vorbearbeitungsstufe (3) und die Fertigbearbeitungsstufe (5) vorgesehen sind, wobei zur Einleitung in die Vorbearbeitungsstufe (3) die Planflächen (27,29) von den Kühl-/Schmiermittelkanälen (39) geschnitten werden. Das Kühl-/Schmiermittel wird also von der Fertigbearbeitungsstufe über die Schnittstelle in die Vorbearbeitungsstufe übergeben, sodass beide Stufen gleichzeitig und sicher versorgt werden. Die Schneidkante der mindestens einen Schneide der Vorbearbeitungsstufe ist auf einem Kreis angeordnet, und die Schneidkante der mindestens einen Schneide der Fertigbearbeitungsstufe list auf einem weiteren Kreis angeordnet. Dabei beträgt der Unterschied der Radien zwischen den beiden Kreisen 0,02 mm bis 0,1 mm, vorzugsweise 0,04 mm bis 0,06 mm, und insbesondere 0,05 mm. Die Schnitttiefe der Fertigbearbeitungsstufe ist demnach sehr gering,
sodass hier Späne mit wenigen 1/100 mm abgetragen werden können. Dies führt zu einer optimalen Herstellungsgenauigkeit, also zu einer exakten Maßgenauigkeit und zu einer sehr hohen Oberflächengüte, wobei gleichzeitig eine lange Standzeit des Werkzeugs gewährleistet wird. Gleichzeitig wird deutlich, dass die Vorbearbeitungsstufe und die Fertigbearbeitungsstufe dazu dienen, den identischen Bereich des Werkstücks zu bearbeiten. Die Vorbearbeitungsstufe erzeugt eine Oberfläche, die durch die Fertigbearbeitungsstufe lediglich geglättet und so fertig bearbeitet wird.

Besonders bevorzugt wird ein Werkzeug, das sich dadurch auszeichnet, dass der konische Schaft der die Koaxialität zwischen den Stufen sichernden Einrichtung als Vollkegel ausgebildet ist. Hierdurch wird eine hohe Stabilität der Schnittstelle gewährleistet, sodass eine präzise Koaxialität auch bei Einleitung großer Schnittkräfte gewährleistet ist.

Zur Lösung dieser Aufgabe wird auch ein Verfahren mit den Merkmalen des Anspruchs 3 vorgeschlagen. Es zeichnet sich dadurch aus, dass die Vor- und Fertigbearbeitung mittels mindestens zweier durch eine Schnittstelle voneinander getrennter Schneiden erfolgt, die in einem Bearbeitungsgang nacheinander mit der zu bearbeitenden Oberfläche des Werkstücks in Eingriff treten. Es ist also möglich, mit einem einzigen Werkzeug dieselbe Oberfläche eines Werkstücks einem Vorbearbeitungs- und einem Fertigbearbeitungsvorgang zu unterwerfen. Bei der Fertigbearbeitung wird eine Schnitttiefe von 1/100 mm, nämlich 0,02 bis 0,1 mm, vorzugsweise von 0,04 bis 0,06 mm, insbesondere 0,05 mm gewählt. Bei dem Verfahren wird ein Rundlauffehler von maximal 3 µm eingestellt. Der Begriff Rundlauffehler spricht hier den Fehler des Rundlaufs der Schneiden der beiden Werkzeugstufen zueinander an. Diese Merkmale führen zu einer optimalen Herstellungsgenauigkeit, also zu einer exakten Maßgenauigkeit und zu einer sehr hohen Oberflächengüte, bei einer langen Standzeit des Werkzeugs.

Die Erfindung wird im Folgenden anhand der Zeichnungen näher erläutert. Es zeigen:
- Figur 1: eine Seitenansicht eines ersten Ausführungsbeispiels eines Werkzeugs in Explosionsdarstellung;
- Figur 2: eine perspektivische Darstellung des Werkzeugs nach An- spruch 1 und
- Figur 3: eine Skizze zur Verdeutlichung der Koaxialität der beiden Stufen eines Werkzeugs.

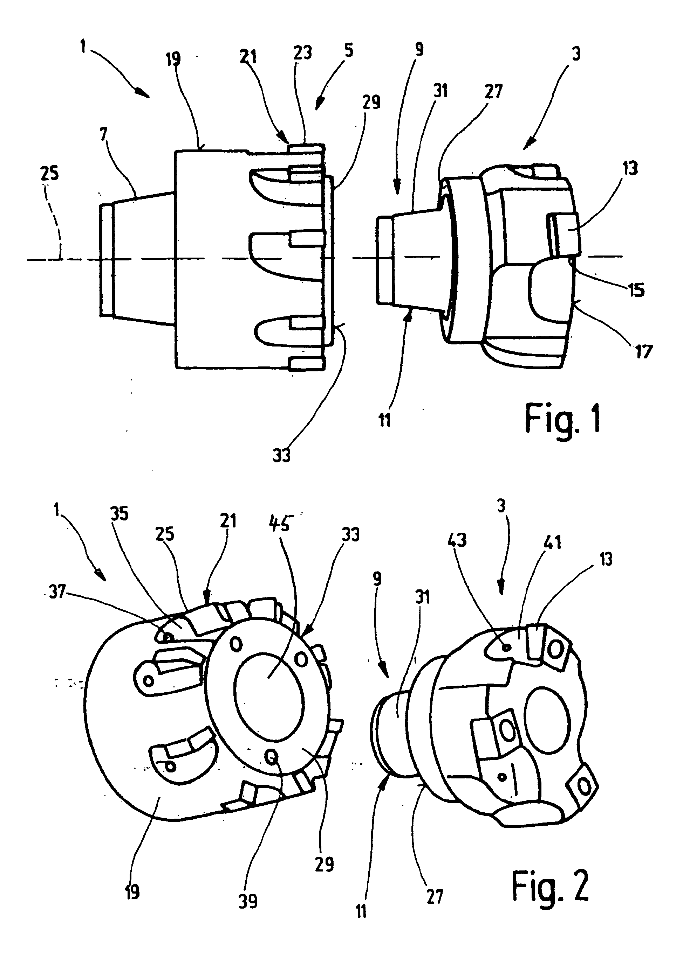

Figur 1 zeigt ein erstes Ausführungsbeispiel eines Werkzeugs 1, das der spanenden Feinbearbeitung von Werkstücken dient und eine Vorbearbeitungsstufe 3 und eine Fertigbearbeitungsstufe 5 aufweist.

Das Werkzeug 1 ist auf geeignete Weise mit einer Werkzeugmaschine - direkt oder über ein Zwischenstück, einen Adapter oder dergleichen - verbindbar, beispielsweise über einen kegelförmigen Schaft 7, der in eine Werkzeugaufnahme greift und auf geeignete Weise mit dieser verspannt wird.

Die Vorbearbeitungsstufe 3 und die Fertigbearbeitungsstufe 5 sind über eine Schnittstelle 9 fest miteinander verbunden, die eine Einrichtung 11 aufweist, mit deren Hilfe die Relativstellung der beiden Stufen beeinflussbar ist. Sie soll die Stufen 3 und 5 möglichst koaxial zueinander anordnen. Die Schnittstelle 9 dient also dazu, die beiden Stufen 3 und 5 des Werkzeugs 1 so miteinander zu verbinden, dass die Mittelachsen der beiden Stufen 3 und 5 miteinander und mit der Mittelachse 25 des Werkzeugs 1 zusammenfallen. Mit Hilfe derartigen Präzisionsschnittstellen ist es möglich, einen Rundlauffehler von - maximal 3 µm zu realisieren.

Die Vorbearbeitungsstufe 3 weist mindestens eine, hier beispielhaft drei, Schneide 13 mit einer geometrisch definierten Schneidkante 15 auf. Die Schneide 13 ist hier beispielhaft als Tangentialschneide ausgebildet, die in die Stirnseite 17 der Vorbereitungsstufe 3 eingesetzt und auf geeignete Weise dort befestigt ist.

Entsprechend weist die Fertigbearbeitungsstufe 5 mindestens eine, hier mehrere, in gleichem Abstand in die Umfangsfläche 19 der Fertigbearbeitungsstufe 5 eingesetzte Schneiden 21 mit einer geometrisch definierten Schneidkante 23 auf.

Die Schneidkanten 15 der Schneiden 13 der Vorbereitungsstufe 3 und die Schneidkanten 23 der Schneiden 21 der Fertigbearbeitungsstufe 5 liegen auf konzentrisch zur Mittelachse 25 des Werkzeugs 1 verlaufenden Kreisen, wobei der Vorbearbeitungsdurchmesser kleiner ist als der Fertigbearbeitungsdurchmesser. Die Durchmesserunterschiede sind in Figur 1 zur Verdeutlichung stark vergrößert.

Die Schnittstelle 9 weist im Bereich der Vorbearbeitungsstufe 3 eine erste Planfläche 27, Fertigungsbearbeitungsstufe 5 eine zweite Planfläche 29 auf. Die Planflächen sind hier beispielhaft als Ringflächen ausgebildet, die in zusammengebautem Zustand der Schnittstelle 9 fest aneinander liegen. Die Planflächen 27 und 29 liegen in Ebenen, auf denen die Mittelachse 25 des Werkzeugs 1 senkrecht steht. Sie dienen insbesondere dazu, die Stufen 3 und 5 so zueinander anzuordnen, dass die Mittelachse der Vorbearbeitungsstufe 3 keinen Winkelversatz gegenüber der Mittelachse' der Fertigbearbeitungsstufe 5 aufweist, also nicht gegenüber dieser verkippt ist.

Bei dem in Figur 1 dargestellten Ausführungsbeispiel ist die Schnittstelle 9 mit einer Einrichtung 1.1 versehen, die an einer Stufe, hier an der Vorbearbeitungsstufe 3 einen Konus, vorzugsweise einen klein bauenden Vollkegel 31 , aufweist, der in eine konische Aufnahme eingreift, die in die Stirnseite 33 der Fertigbearbeitungsstufe 5 eingebracht ist.

Figur 2 zeigt das Werkzeug 1 aus Figur 1 in perspektivischer Ansicht. Gleiche Teile sind mit gleichen Bezugsziffern versehen, so dass auf die Beschreibung zu Figur 1 verwiesen wird.

Deutlich erkennbar sind hier die mindestens eine Schneide 21. Bei dem hier dargestellten Ausführungsbeispiel sind acht Schneiden in gleichem Umfangsabstand in die Umfangsfläche 19 der Fertigbearbeitungsstufe 5 eingebracht. Bei der Bearbeitung einer Werkstückoberfläche dreht sich die Fertigbearbeitungsstufe 5 -in Vorschubrichtung gesehen- im Uhrzeigersinn, so dass jeweils die Schneidkanten 25 der Schneiden 21 Späne von der Werkstückoberfläche abtragen. In Drehrichtung gesehen ist vor jeder Schneide ein Spanraum 35 vorgesehen, in den die abgetragenen Späne gelangten.

Vorzugsweise ist das Werkzeug 1 mit einer Kühl-/ Schmiermittelquelle verbunden, um die Schneiden 21 bei der Bearbeitung eines Werkstücks kühlen zu können und um die entstehenden Späne auszutragen. Bei der Darstellung gemäß Figur 2 ist ersichtlich, dass in einen Spanraum 35 jeweils ein Kühl-/Schmiermittelkanal 37 mündet, um den gewünschten Effekt zu erreichen.

In die Stirnfläche 33 beziehungsweise in die zweite Planfläche 29 münden ebenfalls Kühl-/Schmiermittelkanäle, über die das Kühl-/Schmiermittel in die Vorbearbeitungsstufe 3 eingeleitet wird. Figur 2 zeigt, dass in einen vor jeder Schneide 13 gelegenen Spanraum 41 ebenfalls Kühl-/Schmiermittelkanäle 43 münden. Damit ist es möglich, auch die Schneiden 13 der Vorbearbeitungsstufe 3 zu kühlen und abgetragene Späne austragen.

In Figur 2 ist noch die konische Ausnehmung 45 zu erkennen, die in die Stirnseite 33 der Fertigbearbeitungsstufe 5 eingebracht ist und die der Aufnahme des Vollkegels 31 dient. Dieser wird auf übliche Weise im Inneren der Ausnehmung 45 verankert. Dabei können herkömmliche Spannmittel verwendet werden. Entscheidend ist, dass mittels der Schnittstelle 9 eine exakte Positionierung der Vorbearbeitungsstufe 3 gegenüber der Fertigbearbeitungsstufe 5 möglich ist, wobei mit Hilfe der Planflächen 27, 29 die Winkelposition der beiden Stufen sichergestellt wird und mittels der Einrichtung 11 deren Koaxialität.

Nach den Erläuterungen wird deutlich, dass die Einrichtung 11 auch jeweils spiegelbildlich ausgebildet sein kann: Bei dem Werkzeug 1 nach Figur 1 könnte der Vollkegel 31, der von der Vorbearbeitungsstufe 3 ausgeht, auch an der Fertigbearbeitungsstufe..5 vorgesehen sein und in eine entsprechende Ausnehmung in der Vorbearbeitungsstufe 3 eingreifen.

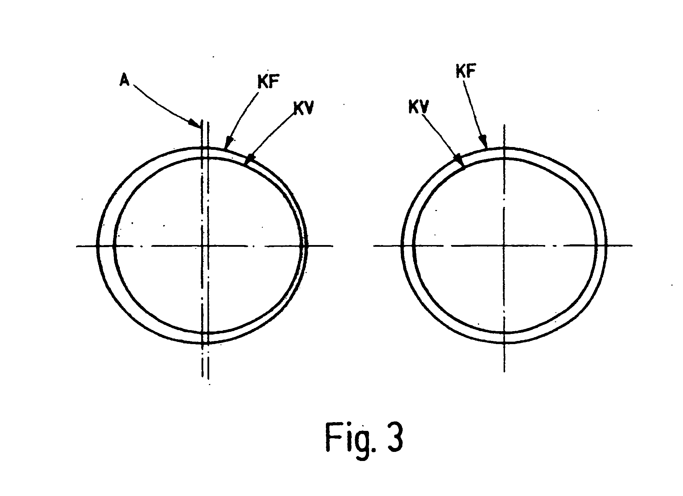

Figur 3 zeigt einen schematischen Vergleich der Kreise, auf denen einerseits die mindestens eine Schneide 13 einer Vorbearbeitungsstufe 3 und die mindestens eine Schneide 23 der Fertigbearbeitungsstufe 5 angeordnet sind.

Rechts in Figur 3 sieht man einen Kreis KV, auf dem die Schneidkante 15 der mindestens einen Schneide 13 der Vorbearbeitungsstufe 3 angeordnet ist und einen Kreis KF, auf dem die Schneidkante 23 mindestens einer Schneide 23 der Fertigbearbeitungsstufe 5 angeordnet ist. Die beiden Kreise liegen bei dem Werkzeug 1 praktisch exakt konzentrisch zueinander, weil die Vorbearbeitungsstufe 3 mit der Fertigbearbeitungsstufe 5 mittels der Schnittstelle 9 sehr exakt miteinander verspannt wird.

Links von den konzentrischen Kreisen KV und KF ist durch eine Skizze angedeutet, dass bei herkömmlichen Werkzeugen, bei denen getrennt die Vor- und Fertigbearbeitung erfolgt, die Kreise KF und KV nicht konzentrisch zueinander angeordnet sind, weil es praktisch unmöglich ist, die Werkzeuge für die Vor- und Fertigbearbeitung konzentrisch zueinander auszurichten. In der Regel ergibt sich ein Achsversatz A, um den der Kreis KV gegenüber dem Kreis KF, hier beispielhaft nach rechts, versetzt ist.

In den beiden Skizzen gemäß Figur 3 wird durch den Abstand zwischen den beiden Kreisen KV und KF angedeutet, welcher Bereich einer Bohrung bei der Feinbearbeitung eines Werkstücks abgetragen werden muss. In der Praxis wird bei der Feinbearbeitung eine sehr geringe Schnitttiefe angestrebt, die im Bereich von wenigen 1/100 mm liegt. Das heißt, dass bei den in Figur 3 wiedergegebenen Kreisen KV und KF ein sehr geringer Größenunterschied gegeben ist. Ergibt sich dann, wie bei der linken Skizze in Figur 3, ein Achsversatz A, kann der innere Kreis KV den äußeren Kreis KF berühren, so dass im Berührungsbereich bei der Feinbearbeitung keine Späne mehr abgetragen werden. Dies führt dazu, dass sich hier eine unzureichende Oberflächenqualität einstellt. Außerdem weicht die Position der fertig bearbeiteten Bohrung um den Achsversatz A von der gewünschten Position ab.

Da die Vorbearbeitungsstufe 3 und die Fertigbearbeitungsstufe 5 bei dem Werkzeug 1 gemäß Figuren 1 und 2 mittels der Schnittstelle 9 sehr exakt konzentrisch zueinander verspannt werden, ergibt sich immer das rechts in Figur 3 dargestellte Bild: Die Kreise KV und KF liegen praktisch exakt konzentrisch zueinander, so dass eine sehr geringe Schnitttiefe bei der Feinbearbeitung realisiert werden kann. Dies führt zu einer sehr guten Herstellungsgenauigkeit, also Maßgenauigkeit und Oberflächengüte, aber auch dazu, dass sich das Werkzeug durch eine lange Standzeit auszeichnet.

Entscheidend ist, dass bei dem Werkzeug 1 zwei Stufen vorgesehen sind, nämlich eine Vorbearbeitungsstufe 3, die mindestens eine Schneide 13 mit einer Schneidkante 15 umfasst, und eine Fertigbearbeitungsstufe 5, die mindestens eine Schneide 21 mit einer Schneidkante 23 aufweist. Für die Vor- und Fertigbearbeitung ist es sehr vorteilhaft, wenn die Schneiden für den jeweiligen Bearbeitungsvorgang speziell abgestimmt werden können. Durch die Trennung der beiden Stufen 3 und 5 im Bereich der Schnittstelle 9 ist es ohne weiteres möglich, eine warmfeste Schneide für die Vorbearbeitung vorzusehen und eine Schneide mit hoher Kantenfestigkeit für die Fertigbearbeitung.

Die Vorbereitungsstufe 3 kann, wie Figur 1 zeigt, mit mindestens einer Schneide 13 versehen werden, die tangential in die Stirnseite 17 der Vorbearbeitungsstufe 3 eingesetzt ist.

Die Fertigbearbeitungsstufe 5 wird vorzugsweise als Stahlkörper realisiert, in dessen Umfangsfläche 19 die mindestens eine Schneide 21 eingelötet wird. Hier können Schneiden aus Hartmetall, Cermet, PKD und PKB realisiert werden.

Da die beiden Stufen 3 und 5 in separaten Herstellungsverfahren erzeugt und auch separat geschliffen werden, kann für jede der Stufen die optimale Schneidengeometrie hergestellt werden, ohne dass Störkonturen beim Schleifen berücksichtigt werden müssten, wie dies bei einstückigen Werkzeugen beziehungsweise Stufenschneiden der Fall ist.

Bei dem Werkzeug 1 lassen sich also bei der Vorbearbeitungsstufe 3 und der Fertigbearbeitungsstufe 5 Schneiden 13 und 21 realisieren, die aufgrund der hochpräzisen Schnittstelle 9 auf konzentrischen Kreisen KV und KF, die auch als Flugkreise bezeichnet werden, liegen. Dabei ist es möglich, im Rahmen der Vorbearbeitung mittels der Vorbearbeitungsstufe 3 eine in einem Werkstück vorhandene Bohrung mit einem Durchmesser vorzubearbeiten, der dem Durchmesser der fertig bearbeiteten Bohrung sehr nahe kommt. Der Abstand der beiden Kreise KV und KF ist also sehr gering. Dies erlaubt es, bei der Fertigbearbeitung Schnitttiefen im Bereich von wenigen 1/100 mm vorzusehen und dabei sicherzustellen, dass im gesamten Bereich der Fertigbearbeitung eine praktisch gleiche Schnitt- : tiefe realisiert wird.

Das Werkzeug 1 zeichnet sich dadurch aus, dass zwei Stufen 3 und 5 mit jeweils mindestens einer Schneide 13 beziehungsweise 21 realisiert wird, die ein und denselben Bereich eines Werkstücks bearbeiten. Die Vorbearbeitungsstufe 3 bearbeitet also einen Bereich des Werkstücks, der in ein und demselben Verfahrensschritt auch mittels der Schneide 21 der Fertigbearbeitungsstufe 5 bearbeitet wird. Das Werkzeug 1 weist also zwei Bearbeitungsstufen 3 und 5 auf, die mittels einer Schnittstelle 9 voneinander getrennt und daher auch getrennt herstellbar sind, aber dazu dienen, den identischen Bereich im Werkstück zu bearbeiten.

Mit Hilfe des hier beschriebenen Werkzeugs 1 lässt sich also ein Verfahren zur Feinbearbeitung von Werkzeugen realisieren, bei dem die Vor- und Fertigungsbearbeitung mittels mindestens zweier durch eine Schnittstelle voneinander getrennter Schneiden erfolgt, nämlich mittels der mindestens einen Schneide 13 der Vorbearbeitungsstufe 3 und mittels der mindestens einen Schneide 21 der Fertigbearbeitungsstufe 5. Die Schneiden 13 und 21 der beiden Stufen 3 und 5 treten in einem Bearbeitungsgang nacheinander mit derselben zu bearbeitenden Oberfläche des Werkstücks in Eingriff. In anderen Worten: Ein Bereich des Werkstücks wird in einem Bearbeitungsgang von den Schneiden zweier Stufen 3 und 5 eines Werkzeugs 1 bearbeitet.

Besonders bevorzugt wird eine Ausführungsform des Verfahrens, bei der eine Schnitttiefe von wenigen 1/100 mm, nämlich 0,02 bis 0,1 mm, vorzugsweise von 0,04 bis 0,06 mm, insbesondere von 0,05 mm realisiert wird. Durch diese sehr geringe Schnitttiefe verbesser sich die Herstellungsgenauigkeit, also die Maßgenauigkeit und die Oberflächengüte, des Werkstücks. Gleichzeitig wird eine sehr hohe Standzeit des Werkzeugs gewährleistet.

Durch den besonderen Aufbau des Werkzeugs 1 wird eine sehr exakte Konzentrizität zwischen Vor- und Fertigbearbeitung realisiert, außerdem ein sehr gleichmäßiges Aufmaß von geringer Größe.

Aus den Erläuterungen des Werkzeugs 1 wird Folgendes deutlich:
Es ist möglich, eine Schnittstelle 9 zwischen einer Vorbearbeitungsstufe 3 und einer Fertigbearbeitungsstufe 5 anzuordnen, was den Vorteil bietet, dass bei der Herstellung der Bearbeitungsstufen auf die für die jeweilige Bearbeitung gewünschten Voraussetzungen einzugehen, beispielsweise auf die Warmfestigkeit der mindestens einen Schneide der Vorbearbeitungsstufe und auf die Kantenfestigkeit der mindestens einen Schneide der Fertigbearbeitungsstufe.

Durch die äußerst exakte Verbindung der beiden Stufen 3 und 5 mittels der Schnittstelle 9 wird darüber hinaus die Möglichkeit geschaffen, im Zuge der Fertigbearbeitung sehr geringe Schnitttiefen zu realisieren. Dafür ist es erforderlich, dass die beiden Teilwerkzeuge, die Vorbearbeitungsstufe 3 und die Fertigbearbeitungsstufe 5 sehr exakt gegeneinander ausgerichtet werden, einerseits bezüglich der Winkel der Mittelachsen der beiden Stufen und andererseits bezüglich der Konzentrizität der Mittelachsen der Vorbearbeitungsstufe 3 und der Fertigbearbeitungsstufe 5. Es ist hier möglich, die beiden Stufen innerhalb weniger µm konzentrisch zueinander auszurichten.

Die hier beschriebene Schnittstelle 9 ermöglicht es, die beiden Bearbeitungsstufen 3 und 5 so zu verbinden, dass sich eine hohe Steifigkeit des Werkzeugs 1 ergibt. Im Übrigen wird durch die Trennung der beiden Bearbeitungsstufen noch erreicht, dass Schwingungen reduziert werden, die die Oberflächengüte der bearbeiteten Werkstückoberfläche beeinträchtigen und die Standzeit des Werkzeugs 1 reduzieren könnten.

## Patentansprüche

1. Werkzeug zur spanenden Feinbearbeitung von Werkstücken mit mindestens einer der Vorbearbeitung dienenden Schneide (13) mit einer geometrisch definierten Schneidkante (15) und mit mindestens einer der Fertigbearbeitung dienenden Schneide (21) mit einer geometrisch definierten Schneidkante (23), wobei die der Vorbearbeitung dienende Schneide (13) Teil einer Vorbearbeitungsstufe (3) und die der Fertigbearbeitung dienende Schneide (21) Teil einer Fertigbearbeitungsstufe (5) ist, und wobei eine zwischen der Vorbearbeitungsstufe (3) und der Fertigbearbeitungsstufe (5) angeordnete Schnittstelle (9) vorgesehen ist, wobei
- die Schnittstelle (9) mit einer ersten Planfläche (27) und einer zweiten Planfläche (29) versehen ist, die an der Vorbearbeitungsstufe (3) und der Fertigbearbeitungsstufe (5) angeordnet sind, und wobei
- die Schnittstelle (9) eine die Koaxialität der Vorbearbeitungsstufe (3) und der Fertigbearbeitungsstufe (5) zueinander gewährleistende Einrichtung (11) zur koaxialen Ausrichtung der Stufen (3, 5) aufweist,
**dadurch gekennzeichnet, dass**
- die Einrichtung (11) eine konische Ausnehmung (45) und einen in diesen eingreifenden konischen Schaft aufweist
- und so ausgelegt ist, dass sich ein Rundlauffehler von maximal 3 µm einstellt; dass
- Kühl-/Schmiermittelkanäle zur Einleitung von Kühl-/Schmiermittel in die Vorbearbeitungsstufe (3) und die Fertigbearbeitungsstufe (5) vorgesehen sind, wobei zur Einleitung in die Vorbearbeitungsstufe (3) die Planflächen (27,29) von den Kühl-/Schmiermittelkanälen (39) geschnitten werden, und dass
- die Schneidkante (15) der mindestens einen Schneide (13) der Vorbearbeitungsstufe (3) auf einem Kreis KV und die Schneidkante (23) der mindestens einen Schneide (21) der Fertigbearbeitungsstufe (5) auf einem Kreis KF angeordnet ist, wobei
- der Unterschied der Radien zwischen den Kreisen KV und KF 0,02 mm bis 0,1 mm, vorzugsweise 0,04 mm bis 0,06 mm, und insbesondere 0,05 mm beträgt, und wobei
- die Vorbearbeitungsstufe (3) und die Fertigbearbeitungsstufe (5) dazu dienen, den identischen Bereich des Werkstücks zu bearbeiten.

2. Werkzeug nach Anspruch 1, **dadurch gekennzeichnet, dass** der konische Schaft als Vollkegel (31) ausgebildet ist.

3. Verfahren zur spanenden Feinbearbeitung einer Bohrung in einem Werkstück mit einem Werkzeug nach einem der Ansprüche 1 oder 2, **dadurch gekennzeichnet, dass** die Vor- und Fertigbearbeitung mittels mindestens zweier durch eine Schnittstelle voneinander getrennter Schneiden erfolgt, die in einem Bearbeitungsgang nacheinander mit der zu bearbeitenden Oberfläche des Werkstücks in Eingriff treten, dass bei der Fertigbearbeitung eine Schnitttiefe von wenigen 1/100 mm gewählt wird, nämlich 0,02 bis 0,1 mm, vorzugsweise von 0,04 bis 0,06 mm, insbesondere 0,05 mm, und ein Rundlauffehler von maximal 3 µm eingestellt wird.

## Claims

1. Tool for fine machining of work pieces, with at least one cutter (13) serving for pre-machining and having a geometrically defined cutting edge (15), and with at least one cutter (21) serving for final machining and having a geometrically defined cutting edge (23), wherein the cutter (13) serving for pre-machining is part of a pre-machining stage (3) and the cutter (21) serving for final machining is part of a final machining stage (5), and wherein an interface (9) is provided that is arranged between the pre-machining stage (3) and the final machining stage (5), wherein
- the interface (9) is provided with a first flat surface (27) and a second flat surface (29) that are arranged on the pre-machining stage (3) and the final machining stage (5), and wherein
- the interface (9) has a device (11) ensuring the coaxiality of the pre-machining stage (3) and the final machining stage (5) relative to each other for the coaxial alignment of the stages (3, 5),
**characterized in that**
- the device (11) has a tapered recess (45) and a tapered shank engaging therewith,
- and is configured so that a runout error of 3 µm max. is achieved; that
- coolant/lubricant channels for the introduction of coolants/lubricants into the pre-machining stage (3) and the final machining stage (5) are provided, wherein, for the introduction into the pre-machining stage (3), the flat surfaces (27, 29) are intersected by the coolant/lubricant channels (39), and that
- the cutting edge (15) of the at least one cutter (13) of the pre-machining stage (3) is arranged on a circle KV and the cutting edge (23) of the at least one cutter (21) of the final machining stage (5) on a circle KF, wherein
- the difference of the radii of the circles KV and KF is 0.02 mm to 0.1 mm, preferably 0.04 mm to 0.06 mm, and particularly 0.05 mm, and wherein
- the pre-machining stage (3) and the final machining stage (5) serve for the machining of the identical portion of the work piece.

2. Tool according to claim 1, **characterised in that** the tapered shank is configured as a full cone (31).

3. Method for fine machining a drill hole in a work piece with a tool according to any one of claims 1 or 2, **characterised in that** the pre-machining and the final machining is effected by means of at least two cutters separated from one another by an interface, which cutters engage with the surface of the work piece to be machined successively in one operating step, that for final machining a cutting depth of a few 1/100 mm, that is 0.02 mm to 0.1 mm, preferably from 0.04 mm to 0.06 mm, and particularly 0.05 mm, is selected, and a runout error of 3 µm max. is adjusted.

## Revendications

1. Outil pour finissage par enlèvement de pièces à usiner comprenant au moins une lame (13) servant de préusinage avec une arête de coupe (15) définie géométriquement et comprenant au moins une lame (21) servant de finissage avec une arête de coupe (23) définie géométriquement, dans lequel la lame (13) servant de préusinage fait partie d'une étape de préusinage (3) et la lame (21) servant de finissage fait partie d'une étape de finissage (5), et dans lequel une interface (9) disposée entre l'étape de préusinage (3) et l'étape de finissage (5) est prévue, dans lequel
- l'interface (9) est pourvue d'une première surface plane (27) et d'une seconde surface plane (29) qui sont disposées dans l'étape de préusinage (3) et l'étape de finissage (5), et dans lequel
- l'interface (9) présente un dispositif (11) garantissant la coaxialité de l'étape de préusinage (3) et de l'étape de finissage (5) l'une par rapport à l'autre pour l'orientation coaxiale des étapes (3, 5),
**caractérisé en ce que**
- le dispositif (11) présente un évidement conique (45) et une tige conique s'engrenant dans celui-ci
- et est conçu de sorte qu'une erreur de rotation de 3 µm maximum s'ajuste ; que
- des canaux de réfrigérant/lubrifiant sont prévus pour l'introduction de réfrigérant/lubrifiant dans l'étape de préusinage (3) et l'étape de finissage (5), dans lequel les surfaces planes (27, 29) sont coupées par les canaux de réfrigérant/lubrifiant (39) pour l'introduction dans l'étape de préusinage (3), et que
- l'arête de coupe (15) de l'au moins une lame (13) de l'étape de préusinage (3) est disposée sur un cercle KV et l'arête de coupe (23) de l'au moins une lame (21) de l'étape de finissage (5) est disposée sur un cercle KF, dans lequel
- la différence des rayons entre les cercles KV et KF est de 0,02 mm à 0,1 mm, de préférence de 0,04 mm à 0,06 mm, et notamment de 0,05 mm, et dans lequel
- l'étape de préusinage (3) et l'étape de finissage (5) servent à usiner la région identique de la pièce à usiner.

2. Outil selon la revendication 1, **caractérisé en ce que** la tige conique est réalisée en tant que cône plein (31).

3. Procédé de finissage par enlèvement d'un alésage dans une pièce à usiner avec un outil selon l'une quelconque des revendications 1 ou 2, **caractérisé en ce que** le préusinage et le finissage s'effectuent au moyen d'au moins deux lames séparées par une interface qui s'engrènent dans une étape d'usinage l'une après l'autre avec la surface à usiner de la pièce à usiner, que, lors du finissage, une profondeur de coupe de quelques 1/100 mm est choisie, à savoir de 0,02 mm à 0,1 mm, de préférence de 0,04 mm à 0,06 mm, et notamment de 0,05 mm, et une erreur de rotation de 3 µm maximum est réglée.
